# EUROPÄISCHE PATENTSCHRIFT

(11) **EP 1 034 366 B1**
(45) Veröffentlichungstag und Bekanntmachung des Hinweises auf die Patenterteilung: **24.09.2003**
(21) Anmeldenummer: 99941458.4
(22) Anmeldetag: 24.07.1999
(51) Int. Cl.: F02F 3/26, F02F 1/42, F02B 23/00

(54) **KOLBEN FÜR EINE KOLBENBRENNKRAFTMASCHINE**
PISTON FOR A PISTON INTERNAL COMBUSTION ENGINE
PISTON D'UN MOTEUR A COMBUSTION INTERNE A PISTON

(30) Priorität: 25.09.1998 DE 19844070; 10.12.1998 DE 19856909; 03.03.1999 DE 19909112
(43) Veröffentlichungstag der Anmeldung: 13.09.2000
(73) Patentinhaber: FEV Motorentechnik GmbH, 52078 Aachen (DE)
(72) Erfinder: UMIERSKI, Markus, D-52222 Stolberg (DE)
(74) Vertreter: Langmaack, Jürgen, Dipl.-Ing.
(86) Internationale Anmeldenummer: EP9905300
(87) Internationale Veröffentlichungsnummer: WO00019080

(56) Entgegenhaltungen:
- EP-A- 0 407 974
- EP-A- 0 565 515
- EP-A- 0 851 102
- US-A- 3 209 735

## Beschreibung

Die Hauptanforderung an Kolbenbrennkraftmaschinen, und zwar sowohl Kolbenbrennkraftmaschinen mit Fremdzündung, als auch mit Selbstzündung des Kraftstoffgemisches, sind hohe spezifische Leistungen, niedrige Schadstoffemissionen und niedrige Kraftstoffverbräuche. Um den Kraftstoffverbrauch im Teillastbereich zu senken, bietet sich beispielsweise bei Kolbenbrennkraftmaschinen die Betriebspunktverschiebung hin zu höheren Lasten bei gleichzeitiger Verringerung des Hubvolumens (sogenanntes Downsizing) an.

Um beispielsweise bei Kolbenbrennkraftmaschinen mit Fremdzündung trotz eines geringeren Hubraums gegenüber einer konventionell gestalteten Kolbenbrennkraftmaschine gleiche Drehmoment- und Leistungswerte zu erzielen, werden derartige im Hubraum verringerte Kolbenbrennkraftmaschinen zumeist mit einer Aufladeeinrichtung, vorzugsweise einem Abgasturbolader, ausgeführt. Mit zunehmendem Aufladegrad und dadurch steigenden Kompressionsenddrücken und Endtemperaturen wächst bei einer derartigen Kolbenbrennkraftmaschine die Klopfneigung. Aus diesem Grund werden aufgeladene Motoren üblicherweise mit einem geringeren Verdichtungsverhältnis betrieben als vergleichbare Saugmotoren. Ein niedriges Verdichtungsverhältnis ist jedoch für den Wirkungsgrad des thermodynamischen Prozesses ungünstig.

Um dieses Problem zu lösen sind derartige Kolbenbrennkraftmaschinen auch so ausgeführt worden, daß durch eine einstellbare Verlagerung der Kurbelwelle ein variables Verdichtungsverhältnis eingestellt werden kann. Dies ermöglichst es, den Teillastbereich mit hohem Verdichtungsverhältnis und magerem Gemisch und den Vollastbereich mit stöchiometrischem Gemisch und niedrigem Verdichtungsverhältnis zu betreiben.

Um übliche Katalysatoren bei derartigen Kolbenbrennkraftmaschinen verwenden zu können, muß bei magerem Betrieb die Zündzeitpunkt/Luftverhältnis-Kalibrierung so gewählt werden, daß die Stickoxidemission gering ist. Dies setzt aber ein Brennverfahren mit sehr guter Magerlauffähigkeit voraus.

Unter thermodynamischen Gesichtspunkten ist eine magere Betriebsweise und ein hohes Verdichtungsverhältnis auch für den Vollastbetrieb vorteilhaft. Dazu muß die Kolbenbrennkraftmaschine so konzipiert sein, daß sie eine genügende Magerlauffähigkeit besitzt, um einerseits die Stickoxidrohemission zu begrenzen und andererseits einen aussetzerfreien Betrieb mit genügendem Abstand von der Magerlaufgrenze zu gewährleisten. Darüber hinaus muß für Kolbenbrennkraftmaschinen mit Fremdzündung die Klopfneigung üblicher Konzepte verringert werden.

Die hierzu erforderlichen bekannten Brennraumkonzepte für derartige Magermotoren sind entweder von 4-Ventil-Kolbenbrennkraftmaschinen entlehnt, wie sie für Personenkraftwagen verwendet werden, die mit sogenannten Tumble-Einlaßkanälen versehen sind, so daß zum Zeitpunkt der Verbrennung die gewünschte Turbulenz vorhanden ist, oder es sind 2-Ventil-Kolbenbrennkraftmaschinen, die mit einem sogenannten Einlaßdrall arbeiten. In allen Fällen gilt es, den die Form des Brennraums wesentlich bestimmenden Kolbenboden der eingesetzten Kolben möglichst "glatt", d. h. ohne Zerklüftungen auszubilden, da derartige Zerklüftungen für den Verbrennungsablauf im Brennraum als ungünstig beurteilt werden.

Ein derartiger Kolben wird im EP 0 851 102 A2 gezeigt.

Bei Kolbenbrennkraftmaschinen mit Selbstzündung, beispielsweise direkteinspritzenden Dieselmotoren, ist eine hohe. Turbulenz wünschenswert, um die Rußemission zu senken.

Der Erfindung liegt die Aufgabe zugrunde, einen Kolben für eine Kolbenbrennkraftmaschine zu schaffen, der bei Fremdzündungssystemen eine erheblich verringerte Klopfneigung, eine erhöhte Magerlauffähigkeit und eine geringere HC-Emission, und bei Selbstündungssystemen, insbesondere bei Dieselkraftstoffen, eine Verminderung der Rußemission bewirkt.

Diese Aufgabe wird gelöst durch einen Kolben für eine Kolbenbrennkraftmaschine mit Fremd- oder Selbstzündung, deren Zylinder mit steuerbaren Gaswechselventilen versehene Gasauslässe und Gaseinlässe aufweisen, wobei jeweils die Gaseinlässe dem in den jeweiligen Zylinder einströmenden Gas eine Strömungsrichtung geben, die zumindest teilweise einen um die Zylinderachse ausgerichteten Drall aufweist, mit einem Kolbenboden, der eine muldenförmige Vertiefung aufweist, die randseitig von einer Quetschfläche begrenzt ist und die wenigstens zwei zumindest über Teilbereiche im wesentlichen radial ausgerichtete, vertiefte Unterbrechungen aufweist. Mit einem derart ausgebildeten Kolben ist es möglich, den Drall um die Zylinderachse des in den Zylinder einströmenden Gases, der als mehr oder weniger starker Restdrall bei einer Tumbieströmung vorhanden ist, insbesondere die bei einem sogenannten Dralleinlaß entstehende ursprünglich gerichtete, durch den hohen Einlaßdrall vorgegebene Zylinderinnenströmung mit zunehmender Aufwärtsbewegung des Kolbens über die vertieften Unterbrechungen in hohe Turbulenzen, also nicht gerichtete Zylinderinnenströmungen umzusetzen. Selbst bei einer Führung des in den Zylinder einströmenden Gases in Form eines Tumbel, ist vielfach noch ein Restdrall vorhanden, der mit der erfindungsgemäßen Gestaltung wirksam in Turbulenzen aufgelöst werden kann, so daß auch hierbei mit dem Einsetzen der Verbrennung ein schneller Flammenfortschritt ermöglicht wird. Damit werden auch die klopfgefährdeten, zündkerzenfernen Brennraumbereiche zügig von der Flammenfront erreicht. Ein weiterer Vorteil besteht darin, daß die Quetschflächen in Zylinderwandnähe reduziert und damit auch die HC-Emission vermindert wird. Die Erhöhung der Turbulenz im Wandbereich der muldenförmigen Vertiefung führt bei Dieselmotoren zu einer verbesserten Gemischbildung und damit zu einer geringeren Ruβemission.

Zweckmäßig ist es, wenn die Unterbrechungen der Quetschfläche höchstens eine Tiefe aufweisen, die der Tiefe der muldenförmigen Vertiefung entspricht. Hierbei können je nach Gesamtgestaltung des Brennraums die Übergänge zwischen den Quetschflächen und den vertieften Unterbrechungen scharfkantig und/oder abgerundet ausgebildet sein. Dies kann beispielsweise dadurch bewirkt werden, daß die vertieften Unterbrechungen als Nuten mit Rechteck-Querschnitt oder im Verlauf wellenförmig ausgeführt werden

Zweckmäßig ist es ferner, wenn wenigstens zwei vorzugsweise diametral gegenüberliegende Unterbrechungen vorgesehen sind, die im wesentlichen quer zum Gaseinlaß ausgerichtet sind. Hierdurch ist gewährleistet, daß sowohl im einlaßnahen Bereich der Drallströmung als auch im einlaßfernen Bereich der Drallströmung in der Aufwärtsbewegung die gerichtete Zylinderinnenströmung turbulent verwirbelt wird, so daß nicht nur im Bereich der Zündkerze sondern auch in den Randbereichen der verbleibenden Quetschflächen sich eine entsprechende Turbulenz ausbilden kann.

In weiterer Ausgestaltung der Erfindung ist vorgesehen, daß die muldenförmige Vertiefung und/oder die Unterbrechungen gegenüber der Kolbenachse exzentrisch im Kolbenboden angeordnet sind. Durch eine derartige unsymmetrische Anordnung wird die Turbulenzbildung noch unterstützt.

In weiterer Ausgestaltung der Erfindung ist vorgesehen, daß die Tiefe der Unterbrechungen etwa 3 bis 20% des Kolbendurchmessers beträgt. Zweckmäßig ist ferner, wenn die Breite der Unterbrechungen und der Durchmesser der muldenförmigen Vertiefung so bemessen sind, daß die Quetschfläche insgesamt etwa 15 bis 40% des Kolbendurchmessers beträgt.

In Ausgestaltung der Erfindung ist es vorteilhaft, wenn die Unterbrechungen den Gaswechselventilen zugeordnet sind und so bemessen sind, daß sie für den Bereich ihrer Tiefe als Ventilfreigang wirken. Diese Ausgestaltung ist insbesondere für Kolbenbrennkraftmaschinen vorteilhaft, deren Gaswechselventile mit frei ansteuerbaren Stellantrieben, beispielsweise in Form von hydraulischen, pneumatischen und/oder elektromagnetischen Aktuatoren versehen sind. Durch frei ansteuerbare Stellantriebe kann eine Betätigung der Gaswechselventile in hohem Maße auf eine Optimierung des Motorbetriebes und/oder des Verbrennungsablaufs abgestellt werden. Durch die erfindungsgemäße Zuordnung der Unterbrechungen in der Quetschflächezu den Gaswechselventilen ist es bei reduziertem Brennraum im Zylinder möglich, zumindest eine Teilöffnung der Gaswechselventile schon zu bewirken, wenn sich der Kolben noch in der oberen Totpunktstellung befindet.

Die Erfindung wird anhand schematischer Zeichnungen eines Ausführungsbeispiels näher erläutert. Es zeigen:
- Fig. 1: eine Aufsicht auf einen Kolbenboden,
- Fig. 2: einen Schnitt gemäß der Linie II-II in Fig. 1,
- Fig. 3: eine Aufsicht entsprechend Fig. 1 mit modifizierten Unterbrechungen der Quetschfläche in der Zuordnung für zwei Gaswechselventile
- Fig. 4: einen Vertikalschnitt gem. der Linie IV-IV in Fig. 3,
- Fig. 5: eine Aufsicht auf einen Kolbenboden mit modifizierter Quetschfläche in der Zuordnung für vier Gaswechelventile.

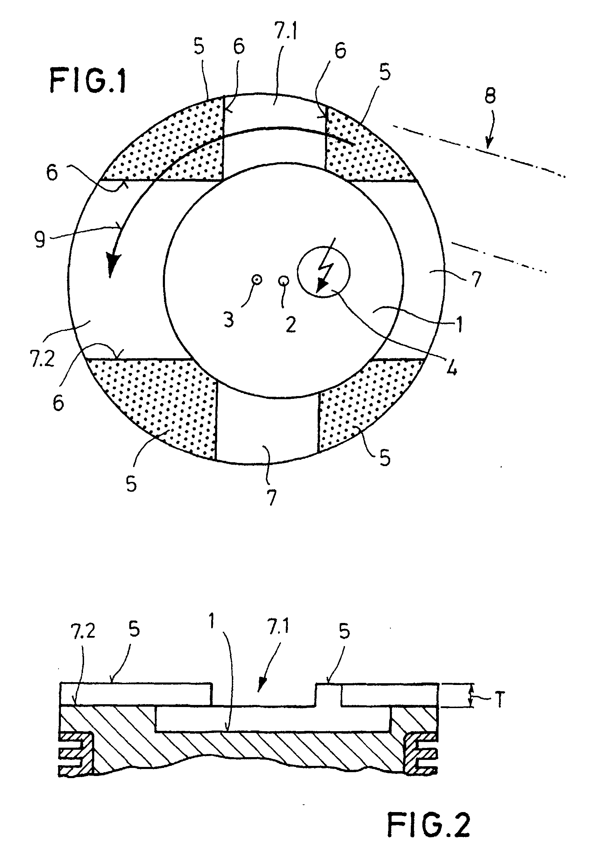

Fig. 1 zeigt die Aufsicht auf einen im wesentlichen ebenflächigen Kolbenboden, der mit einer muldenförmigen Vertiefung 1 versehen ist. Die Vertiefung 1 ist bei dem hier dargestellten Ausführungsbeispiel kreiszylindrisch, mit kreisförmiger Randkontur ausgebildet, wobei die Achse 2 der Vertiefung 1 gegenüber der Kolbenachse 3 in Richtung auf die hier angedeutete Zündkerze 4 verschoben ist. Die Randkontur kann aber auch einen anderen Verlauf aufweisen.

Die Vertiefung 1 wird randseitig durch eine Quetschfläche 5 begrenzt, die radial ausgerichtete, vertiefte und Störkanten 6 bildende Unterbrechungen 7 aufweist. die Störkanten 6 können scharfkantig oder auch abgerundet ausgebildet sein. Die Unterbrechungen 7 weisen hier nicht nur unterschiedliche Breiten auf, sondern sind auch in bezug auf die Kolbenachse 3 unsymmetrisch auf dem Kolbenboden angeordnet. Bei dem dargestellten Beispiel sind die in bezug auf die Zylinderachse 3 verschobenen Unterbrechungen 7.1 schmaler ausgeführt als die quer hierzu verlaufenden Vertiefungen 7.2.

Wie die Schnittdarstellung gemäß Fig. 2 zeigt, ist die Tiefe T der Unterbrechungen 7 geringer als die Tiefe der muldenförmigen Vertiefung 1 und so bemessen, daß sie etwa 3 bis 20% des Kolbendurchmessers beträgt. Die Breite der Unterbrechungen 7 ist ferner so bemessen, daß die Größe der hier in vier Teilflächen unterteilten Quetschfläche 5 je nach Einsatzfall zwischen 15 und 40% der Kolbenfläche beträgt.

In Fig. 1 ist schematisch die Zuordnung eines Dralls zum Gaseinlaß 8 des zugehörigen Zylinders angedeutet. In der Ansaugphase, d. h. bei der Abwärtsbewegung des Kolbens und noch zu Beginn seiner Aufwärtsbewegung ergibt sich im Zylinderinnenraum eine Dra1lströmung, wie sie durch den Pfeil 9 angedeutet ist. Hierbei kann es sich um eine durch die Ausrichtung der Gaseinlässe gezielt erzeugte Drallströmung oder um den Restdrall der anders geführten Gasströmung im Zylinder, beispielsweise einer Tumbleströmung handeln. Mit zunehmender Aufwärtsbewegung des Kolbens wird jedoch diese Drallströmung 9 oder der Restdrall durch den immer stärker werdenden Einfluß der Störkanten 6 der Unterbrechungen 7 in ihrer freien Drallbewegung behindert und in der Weise verwirbelt, daß sich eine über den gesamten Brennraum verteilende, nicht gerichtete turbulente Strömung im Verbrennungsraum ausbildet. Durch die von den Störkanten 6 begrenzten Seitenflächen der Unterbrechungen 7 wird von der ursprünglichen Drallströmung in immer stärkerem Maße ein Teil zur Brennraummitte umgelenkt und hier durch das Aufeinandertreffen von mehreren dieser umgelenkten Teilströmungen verwirbelt und wieder in Richtung auf die Zylinderwandung umgelenkt, so daß sich bei Zündung des turbulenten Kraftstoff-Luft-Gemisches die Flammenfront auch zügig in die zündkerzenfernen Bereiche ausbreiten kann und so die Klopfgefährdung verringert werden kann.

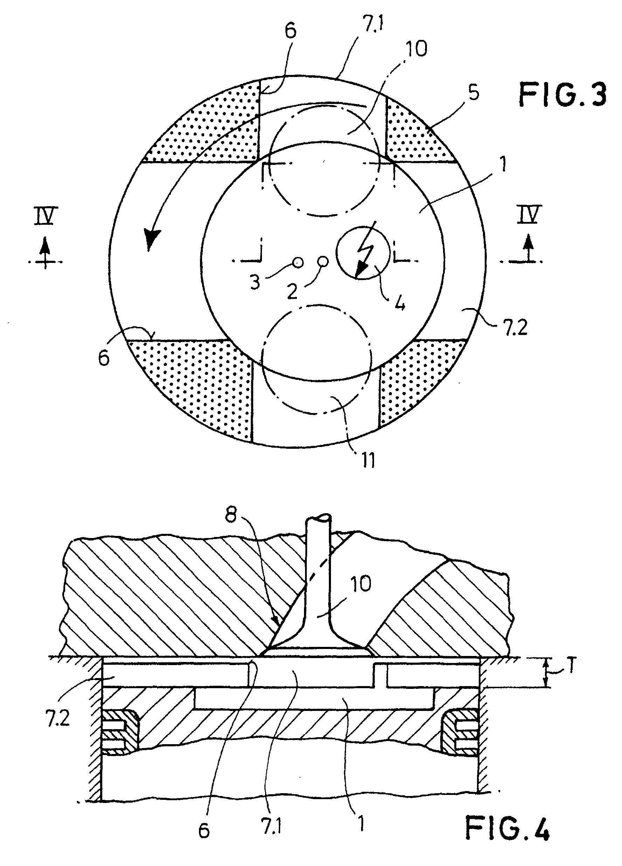

In den Fig. 3 und 4 ist eine modifizierte Ausführungsform des anhand von Fig. 1 beschriebenen Kolbenbodens für eine Kolbenbrennkraftmaschine mit zwei Gaswechselventilen dargestellt. In diesen Darstellungen sind die Positionen des Gaseiniaßventils 10 und des Gasauslaßventils 11 gezeigt.

Die in bezug auf die Zylinderachse 3 verschobenen Unterbrechungen 7.1 sind hierbei in ihrer Breite so dimensioniert, daß der Beginn der Öffnungsbewegung der Gaswechselventile schon in einen Zeitpunkt verlegt werden kann, zu dem sich der Kolben noch im Bereich der oberen Totpunktstellung befindet. Bei dieser Bemessung wirken die Unterbrechungen 7 für den Bereich ihrer Tiefe T als Ventilfreigang.

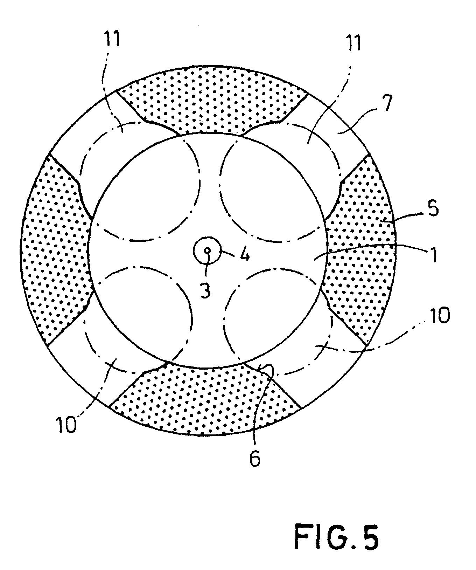

Diese Konzeption läßt sich auch auf Kolbenbrennkraftmaschinen mit vier Gaswechselventilen je Zylinder, d. h. zwei Gaseinlaßventilen 10 und zwei Gasauslaßventilen 11 verwirklichen, wie dies in Fig. 5 angedeutet ist. Bei der hier dargestellten Ausführungsform ist die muldenförmige Vertiefung 1 koaxial zur Zylinderachse 3 ausgerichtet. Eine Zündeinrichtung 4, beispielsweise eine Zündkerze, eine Zündstrahleinrichtung bei einem Gasmotor oder eine Kraftstoffeinspritzdüse bei einem Selbstzündungsmotor, münden im Bereich der Zylinderachse 3 in den Brennraum ein. Die Vertiefungen 7.1 bzw. 7.2 können wiederum, wie in Fig. 5 dargestellt, als Ausfräsungen der Quetschfläche 5 hergestellt werden. Durch eine entsprechende andere Führung des Werkzeuges läßt sich jedoch die Geometrie der Störkanten 6 so verändern, daß, wie dargestellt, die Störkanten 6 der Unterbrechungen zumindest über einen Teil ihrer Länge im wesentlichen radial ausgerichtet sind, im Bereich des Freigangs aber auch teilweise koaxial zu den Gaswechselventiien verlaufen.

Statt der dargestellten Rechteckkontur der Folge von Vertiefungen 7 und Quetschflächen 5 kann die Anordnung auch einen wellenartigen Konturverlauf aufweisen. Beispielsweise kann ein ellenartiger Konturverlauf schon dadurch bewirkt werden, daß die Störkanten 6 mehr oder weniger abgerundet ausgeführt sind und ihre Übergänge jeweils zur Bodenfläche der Vertiefungen ebenfalls abgerundet ausgeführt sind. Dies kann bis hin zu einer "echten" Wellenform abgewandelt werden.

Statt einer Rechteck- oder Wellenkontur kann auch eine sägezahnartige oder eine Folge von Trapezen gebildete Kontur der Folge der Vertiefungen 7 vorgesehen werden. Auch ein Wechsel von scharfkantigen und abgerundeten Störkanten 6 kann zweckmäßig sein.

## Patentansprüche

1. Kolben für eine Kolbenbrennkraftmaschine mit Fremd- oder Selbstzündung, deren Zylinder mit steuerbaren Gaswechseiventilen (10, 11) versehene Gasauslässe und Gaseinlässe aufweisen, wobei jeweils die Gaseinlässe (8) dem in den jeweiligen Zylinder einströmenden Gas eine Strömungsrichtung geben, die zumindest teilweise einen um die Zylinderachse (3) ausgerichteten Drall aufweist, mit einem Kolbenboden, der eine muldenförmige Vertiefung aufweist, die randseitig von einer Quetschfläche (5) begrenzt ist, **dadurch gekennzeichnet, dass** die Quetschfläche (5) wenigstens zwei zumindest über Teilbereiche im wesentlichen radial ausgerichtete, vertiefte Unterbrechungen (7) aufweist.

2. Kolben nach Anspruch 1, **dadurch gekennzeichnet, daß** die Unterbrechungen (7) der Quetschfläche (5) höchstens eine Tiefe aufweisen, die der Tiefe der muldenförmige Vertiefung (1) entspricht.

3. Kolben nach Anspruch 1 oder 2, **dadurch gekennzeichnet, daß** die Unterbrechungen (7) radial ausgerichtete Störkanten (6) aufweisen.

4. Kolben nach einem der Ansprüche 1 bis 3, **dadurch gekennzeichnet, daß** zumindest die Störkanten (6) scharfkantig ausgebildet sind.

5. Kolben nach einem der Ansprüche 1 bis 3, **dadurch gekennzeichnet, daß** zumindest die Störkanten (6) abgerundet ausgebildet.

6. Kolben nach Anspruch 1 bis 5, **dadurch gekennzeichnet, daß** wenigstens zwei Unterbrechungen (7.1) vorgesehen sind.

7. Kolben nach einem der Ansprüche 1 bis 6, **dadurch gekennzeichnet, daß** die muldenförmige Vertiefung (1) und/oder die Unterbrechungen (7) gegenüber der Kolbenachse (3) exzentrisch im Kolbenboden angeordnet sind.

8. Kolben nach einem der Ansprüche 1 bis 7, **dadurch gekennzeichnet, daß** die Tiefe T der Unterbrechungen (7) jeweils etwa 3 bis 20% des Kolbendurchmessers beträgt.

9. Kolben nach einem der Ansprüche 1 bis 8, **dadurch gekennzeichnet, daß** die Form der Unterbrechungen (7) und der der muldenförmigen Vertiefung (1) so bemessen sind, daß die Summe der Quetschflächen (5) insgesamt etwa 15 bis 40% der Kolbenfläche beträgt.

10. Kolben nach einem der Ansprüche 1 bis 9, **dadurch gekennzeichnet, daß** die Unterbrechungen (7) den Gaswechselventilen zugeordnet sind und so bemessen sind, daß sie für den Bereich ihrer Tiefe (T) als Ventilfreigang wirken.

## Claims

1. Piston for a reciprocating internal combustion engine with spark, ignition or self-ignition, the cylinders of which comprise gas outlets and gas inlets provided with controllable gas exchange valves (10, 11), wherein the gas inlets (8) in each case give the gas flowing into the respective cylinder a flow direction comprising at least in part a turning movement which is oriented around the cylinder axis (3), with a piston crown comprising a trough-shaped recess which is defined at the edge by a pinch area (5), **characterised in that** the pinch area (5) comprises at least two recessed interruptions (7) oriented substantially radially at least over sub-regions.

2. Piston according to Claim 1, **characterised in that** the interruptions (7) of the pinch area (5) are at most of a depth which corresponds to the depth of the trough-shaped recess (1).

3. Piston according to Claim 1 or 2, **characterised in that** the interruptions (7) comprise radially oriented disturbance edges (6).

4. Piston according to any one of Claims 1 to 3, **characterised in that** at least the disturbance edges (6) are sharp-edged.

5. Piston according to any one of Claims 1 to 3, **characterised in that** at least the disturbance edges (6) are rounded.

6. Piston according to Claims 1 to 5, **characterised in that** at least two interruptions (7.1) are provided.

7. Piston according to any one of Claims 1 to 6, **characterised in that** the trough-shaped recess (1) and/or the interruptions (7) are disposed eccentrically with respect to the piston axis (3) in the piston crown.

8. Piston according to any one of Claims 1 to 7, **characterised in that** the depth T of the interruptions (7) is in each case approximately 3 to 20% of the piston diameter.

9. Piston according to any one of Claims 1 to 8, **characterised in that** the form of the interruptions (7) and that of the trough-shaped recess (1) are dimensioned such that the sum of the pinch areas (5) overall is approximately 15 to 40% of the piston area.

10. Piston according to any one of Claims 1 to 9, **characterised in that** the interruptions (7) are associated with the gas exchange valves and dimensioned such that they act as a valve passage for the region of their depth (T).

## Revendications

1. Piston pour un moteur à combustion interne à piston, à allumage commandé ou auto-allumage, dont les cylindres présentent des sorties des gaz et des admissions de gaz munies de soupapes d'échange de gaz (10, 11) pouvant être commandées, les admissions de gaz (8) donnant à chaque fois un sens d'écoulement au gaz arrivant dans le cylindre respectif, qui présente au moins partiellement une giration orientée autour de l'axe du cylindre (3), avec un fond de piston, qui présente un creux en forme de cuvette, qui est limité sur le bord par une surface sertie (5), **caractérisé en ce que** la surface sertie (5) présente au moins deux interruptions (7) creusées, orientées essentiellement radialement au moins sur des zones partielles.

2. Piston selon la revendication 1, **caractérisé en ce que** les interruptions (7) de la surface sertie (5) présentent au maximum une profondeur qui correspond à la profondeur du creux (1) en forme de cuvette.

3. Piston selon la revendication 1 ou 2, **caractérisé en ce que** les interruptions (7) présentent des arêtes perturbatrices (6) orientées radialement.

4. Piston selon l'une quelconque des revendications 1 à 3, **caractérisé en ce qu'**au moins les arêtes perturbatrices (6) sont réalisées à bords vifs.

5. Piston selon l'une quelconque des revendications 1 à 3, **caractérisé en ce qu'**au moins les arêtes perturbatrices (6) sont réalisées en arrondi.

6. Piston selon l'une quelconque des revendications 1 à 5, **caractérisé en ce qu'**au moins deux interruptions (7.1) sont prévues.

7. Piston selon l'une quelconque des revendications 1 à 6, **caractérisé en ce que** le creux (1) en forme de cuvette et/ou les interruptions (7) sont disposé(es) dans le fond du piston, de manière excentrique par rapport à l'axe du piston (3).

8. Piston selon l'une quelconque des revendications 1 à 7, **caractérisé en ce que** la profondeur T des interruptions (7) se monte respectivement à environ 3 à 20% du diamètre du piston.

9. Piston selon l'une quelconque des revendications 1 à 8, **caractérisé en ce que** la forme des interruptions (7) et celle du creux (1) en forme de cuvette sont dimensionnées de telle sorte que la somme des surfaces serties (5) se monte en tout à environ 15 à 40% de la surface du piston.

10. Piston selon l'une quelconque des revendications 1 à 9, **caractérisé en ce que** les interruptions (7) sont associées aux soupapes d'échange de gaz et sont dimensionnées de telle sorte qu'elles agissent comme sortie de soupape pour la zone de leur profondeur (T).
